# EUROPEAN PATENT SPECIFICATION

(11) **EP 4 103 007 B1**
(45) Date of publication and mention of the grant of the patent: **22.10.2025**
(21) Application number: 21709230.3
(22) Date of filing: 05.02.2021
(51) Int. Cl.: A43B 1/00, A43B 1/12, A43B 23/02

(54) **ARTICLE OF FOOTWEAR AND METHOD OF MANUFACTURE**
SCHUHARTIKEL UND HERSTELLUNGSVERFAHREN
ARTICLE CHAUSSANT ET PROCÉDÉ DE FABRICATION

(30) Priority: 12.02.2020 US 202016788589
(43) Date of publication of application: 21.12.2022
(73) Proprietor: NIKE Innovate C.V., Beaverton, Oregon 97005 (US)
(72) Inventor: CAPONE, Francesca, Beaverton, Oregon 97005 (US); KANG, Sanghee, Beaverton, Oregon 97005 (US); NYKREIM, Kara, Beaverton, Oregon 97005 (US); RICHEZ, Elodie, Beaverton, Oregon 97005 (US)
(74) Representative: Müller-Boré & Partner Patentanwälte PartG mbB
(86) International application number: PCT/US2021/016702
(87) International publication number: WO 2021/162937

(56) References cited:
- EP-A1- 0 593 880
- WO-A1-2018/144123
- US-A1- 2005 170 766
- US-A1- 2012 324 764
- US-A1- 2019 366 590

## Description

### TECHNICAL FIELD

The present disclosure generally relates to an article of footwear and a method of manufacturing an article of footwear.

### BACKGROUND

Footwear often includes many components of many different materials. An article of footwear typically includes an upper that is operative to receive a foot, and a sole structure configured to be located under a wearer's foot to space the foot away from the ground. The sole structure often includes a rubber or foamed elastomeric material that is suitable for attenuating ground impact forces.

It has been estimated that each year over 300 million pairs of shoes are thrown away globally. In the past, it was common for waste material from these shoes to simply be discarded. Further, the footwear manufacturing process produces surplus material in the initial formation of an article of footwear, e.g. offcuts or scrap which are also often discarded.

More recently, techniques have been developed to incorporate recycled waste and formation surplus material into new shoes. These techniques typically involve separating the waste and/or excess surplus materials into small pieces, generally referred to as "regrind."

Document WO 2018/144123 A1 describes a fiber bound engineered material that imparts an intended characteristic at an intended relative location. A fiber layer is entangled with additional fibers in a manner to create a non-uniform engineered material. The lack of uniformity of a fiber bound engineered material may be accomplished through manipulation of the fibers and/or through fiber binding a scrim. The fiber layer binds with additional fibers through entanglement such that a mechanical connection between the entangled fibers is provided. This entanglement allows the fibers to bind without supplemental adhesives, interlacing, or connections. Variations in the fibers and/or inclusion of scrim materials prior to entanglement allows for an intended characteristic (e.g., a functional characteristic) at an intended relative location (e.g., a position determined by an article to be formed therefrom).

Document US 2012/324764 A1 describes a customizable shoe, comprising a footwear having a hollow structure having an outer surface and an inner surface, a plurality of pockets formed across the footwear structure's inner surface. Each pocket comprises an opening. The customizable shoe further comprises a plurality of removable pieces, wherein said removable pieces are configured to fit inside of at least one of said pockets, and attaching means, wherein each attaching mean mechanically connects at least adjacent replaceable pieces.

### SUMMARY

The claimed invention is defined by the features set forth in the appended independent claims. Additional embodiments of the claimed invention are defined by the dependent claims.

The presently disclosed technology adopts a sustainable and environmentally conscious approach to footwear manufacturing, which contemplates that waste material from discarded shoes may be ground and recycled to form re-usable "green regrind material", and that excess surplus material such as offcuts or scrap material produced during initial shoe formation may be ground and recycled to form re-usable "grey regrind material". These re-usable "green regrind materials" and "grey regrind materials" may be further be incorporated into new shoes or footwear applications.

More particularly, the presently disclosed technology involves a manner of constructing an article of footwear that incorporates scrap particulate matter, into an outer wall of the upper. The scrap particulate matter may incorporate at least one of "green regrind material", i.e., recycled and ground waste material from a prior footwear application, or "grey regrind material", i.e., ground offcuts and/or scrap material produced by the manufacturing process of a prior footwear application. As described below, use of the scrap particulate matter or regrind material can provide a unique visual effect, while also improving the cushioning and/or ventilation properties of the upper.

The method of manufacturing the article of footwear is designed to be an environmentally-friendly and sustainable process, wherein recycled or surplus material from at least one of an upper and a sole structure of another article of footwear is utilized in the formation of a newly formed shoe, to reduce material waste. Namely, scrap material may be obtained or received; regrind material, particularly green regrind material or grey regrind material, is formed by dividing the scrap material into a plurality of discrete pieces of scrap particulate matter via at least one of a grinding process or a shredding process; the discrete pieces of scrap particulate matter are combined with a resin binder to form a mixture; the mixture is thermoformed to form a layer of scrap particulate matter; and the layer of scrap particulate matter is inserted into a closed pocket formed between the inner layer of a wall of an upper and the outer layer of the wall of the upper of the article of footwear.

### BRIEF DESCRIPTION OF THE DRAWINGS

The drawings described herein are for illustrative purposes only, are schematic in nature, and are intended to be exemplary rather than to limit the scope of the disclosure.
FIG. 1 is a schematic, perspective view of a lateral side of an article of footwear, wherein a layer of scrap particulate matter is disposed in a closed pocket formed between an inner layer and an outer layer of the upper and positioned in a vamp portion of the upper.
FIG. 2 is a schematic, perspective view of the lateral side of an article of footwear, wherein a layer of scrap particulate matter is disposed in a closed pocket formed between an inner layer and an outer layer of the upper and positioned in a midfoot region of the upper.
FIG. 3 is a schematic, perspective view of the lateral side of an article of footwear, wherein a layer of scrap particulate matter is disposed in a closed pocket formed between an inner layer and an outer layer of the upper and positioned in a heel region of the upper.
FIG. 4 is a schematic, perspective view of a medial side of an article of footwear, wherein a layer of scrap particulate matter is disposed in a closed pocket formed between an inner layer and an outer layer of the upper and positioned in a vamp portion of the upper.
FIG. 5 is a schematic, perspective view of the medial side of an article of footwear, wherein a layer of scrap particulate matter is disposed in a closed pocket formed between an inner layer and an outer layer of the upper and positioned in a midfoot region of the upper.
FIG. 6 is a schematic, perspective view of the medial side of an article of footwear, wherein a layer of scrap particulate matter is disposed in a closed pocket formed between an inner layer and an outer layer of the upper and positioned in a heel region of the upper.
FIG. 7 is a schematic, perspective, partially-exploded view of an example article of footwear.
FIG. 8 is a schematic, perspective, plan view of an example article of footwear.
FIG. 9 is a flow chart of the example method of manufacturing the article of footwear of FIGS. 1-8.
FIG. 10 is a flow chart further detailing step 103 FIG. 9.

### DETAILED DESCRIPTION

While the present disclosure may be described with respect to specific applications or industries, those skilled in the art will recognize the broader applicability of the disclosure.

The terms "a", "an", "the", "at least one", and "one or more" are used interchangeably to indicate that at least one of the items is present. A plurality of such items may be present unless the context clearly indicates otherwise. All numerical values of parameters (e.g., of quantities or conditions) in this specification, unless otherwise indicated expressly or clearly in view of the context, including the appended claims, are to be understood as being modified in all instances by the term "about" whether or not "about" actually appears before the numerical value. "About" indicates that the stated numerical value allows some slight imprecision (with some approach to exactness in the value; approximately or reasonably close to the value; nearly). If the imprecision provided by "about" is not otherwise understood in the art with this ordinary meaning, then "about" as used herein indicates at least variations that may arise from ordinary methods of measuring and using such parameters. In addition, a disclosure of a range is to be understood as specifically disclosing all values and further divided ranges within the range.

The terms "comprising", "including", and "having" are inclusive and therefore specify the presence of stated features, steps, operations, elements, or components, but do not preclude the presence or addition of one or more other features, steps, operations, elements, or components. Orders of steps, processes, and operations may be altered when possible, and additional or alternative steps may be employed. As used in this specification, the term "or" includes any one and all combinations of the associated listed items. The term "any of" is understood to include any possible combination of referenced items, including "any one of" the referenced items. The term "any of" is understood to include any possible combination of referenced claims of the appended claims, including "any one of" the referenced claims.

Features shown in one figure may be combined with, substituted for, or modified by, features shown in any of the figures. Unless stated otherwise, no features, elements, or limitations are mutually exclusive of any other features, elements, or limitations. Furthermore, no features, elements, or limitations are absolutely required for operation. Any specific configurations shown in the figures are illustrative only and the specific configurations shown are not limiting of the claims or the description.

For consistency and convenience, directional adjectives are employed throughout this detailed description corresponding to the illustrated embodiments. Those having ordinary skill in the art will recognize that terms such as "above", "below", "upward", "downward", "top", "bottom", etc., may be used descriptively relative to the figures, without representing limitations on the scope of the invention, as defined by the claims. Any numerical designations, such as "first" or "second" are illustrative only and are not intended to limit the scope of the disclosure in any way.

The term "longitudinal", as used throughout this detailed description and in the claims, refers to a direction extending a length of a component. For example, a longitudinal direction of a shoe extends between a forefoot region and a heel region of the shoe. The term "forward" or "anterior" is used to refer to the general direction from a heel region toward a forefoot region, and the term "rearward" or "posterior" is used to refer to the opposite direction, i.e., the direction from the forefoot region toward the heel region. In some cases, a component may be identified with a longitudinal axis as well as a forward and rearward longitudinal direction along that axis. The longitudinal direction or axis may also be referred to as an anterior-posterior direction or axis.

The term "transverse", as used throughout this detailed description and in the claims, refers to a direction extending a width of a component. For example, a transverse direction of a shoe extends between a lateral side and a medial side of the shoe. The transverse direction or axis may also be referred to as a lateral direction or axis or a mediolateral direction or axis.

The term "vertical", as used throughout this detailed description and in the claims, refers to a direction generally perpendicular to both the lateral and longitudinal directions. For example, in cases where a sole is planted flat on a ground surface, the vertical direction may extend from the ground surface upward. It will be understood that each of these directional adj ectives may be applied to individual components of a sole. The term "upward" or "upwards" refers to the vertical direction pointing towards a top of the component, which may include an instep, a fastening region and/or a throat of an upper. The term "downward" or "downwards" refers to the vertical direction pointing opposite the upwards direction, toward the bottom of a component and may generally point towards the bottom of a sole structure of an article of footwear.

In addition, the term "proximal" refers to a direction that is nearer a center of a footwear component, or is closer toward a foot when the foot is inserted in the article of footwear as it is worn by a user. Likewise, the term "distal" refers to a relative position that is further away from a center of the footwear component or is further from a foot when the foot is inserted in the article of footwear as it is worn by a user. Thus, the terms proximal and distal may be understood to provide generally opposing terms to describe relative spatial positions.

To assist and clarify the subsequent description of various embodiments, various terms are defined herein. Unless otherwise indicated, the following definitions apply throughout this specification (including the claims). An "article of footwear", a "footwear article of manufacture", and "footwear" may be considered to be both a machine and a manufacture. Assembled, ready to wear footwear articles (e.g., shoes, sandals, boots, etc.), as well as discrete components of footwear articles (such as a midsole, an outsole, an upper component, etc.) prior to final assembly into ready to wear footwear articles, are considered and alternatively referred to herein in either the singular or plural as "article(s) of footwear".

The following discussion and accompanying figures disclose various footwear configurations and methods relating to manufacturing of the same. Although the article of footwear 10 is depicted as athletic footwear configured for sports, such as sneakers, in the associated Figures, concepts associated with the configurations and methods may be applied to various other types of athletic footwear articles, such as a hiking boots and shoes, soccer shoes, football shoes, running shoes, cross-training shoes, rugby shoes, basketball shoes, etc. However, the article of footwear 10 is not limited to sneakers or other sports shoes. In some embodiments, the disclosed provisions may be configured for use with various kinds of non-sports-related footwear, including but not limited to, boots, leisure shoes, dress shoes, work shoes, sandals, slippers, or any other category of footwear, which may also incorporate concepts discussed herein.

In a general sense, the article footwear 10 of the present disclosure is designed to be manufactured via an environmentally friendly and sustainable process. In this way, scrap material, manufacturing surplus material, or recycled or reclaimed material from a discarded or unsellable shoe, is utilized in the formation of a newly-formed shoe, to reduce material waste. More particularly, recycled material from at least one of an upper and a sole structure of another article of footwear or the surplus material from the formation of at least one of an upper and a sole structure of another article of footwear is divided via a grinding process or shredding process into a plurality of discrete pieces of scrap particulate matter 22, also referred to as "regrind". Regrind material, by definition, is material that has undergone at least one processing method and the subsequent sprue, runners, flash, or rejected parts are ground or chopped.

Further, regrind 22 is defined herein as a mixture of at least one of cured rubber granules, foam granules, textile pieces and fibers, leather pieces, and polymer pieces. Regrind may include ground waste from used, discarded, or unsellable footwear and/or ground surplus material or recycled scrap from footwear manufacturing.

In one example, the regrind 22 is a "grey regrind material", which is defined as ground/shredded/cut/sectioned pieces of surplus material from footwear manufacturing, e.g., ground waste or scrap rubber from footwear manufacturing, ground waste or scrap foam from footwear manufacturing, ground or shredded waste or scrap textile fibers (e.g., string, thread, yarn) from footwear manufacturing, or a combination thereof. In another example, the regrind 22 is a recycled or "green regrind material" wherein the green regrind material consists of ground/shredded/cut/sectioned pieces of recycled, discarded, or unsellable footwear, e.g., ground cured rubber from footwear, ground foam from footwear, ground or shredded textile fibers from footwear, or a combination thereof. In such examples, the green regrind material is obtained from ground post-consumer waste, e.g., footwear waste, recycled post-consumer shoes, and/or ground portions of unsellable footwear. Unless otherwise specified, the term "regrind" should not imply any specific process, but rather is intended to refer generally to sectioned pieces of post-consumer and/or post-manufacturing waste.

The scrap particulate matter or regrind 22 is then formed into a layer of scrap particulate matter 22 and inserted between an inner layer 18 and an outer layer 20 of a wall 15 an upper 12 of a newly formed article of footwear 10. To provide a unique visual effect, the outer layer 20 may be formed of a sufficiently transparent or translucent material, such that the regrind 22 is at least partially visible through the outer layer 20.

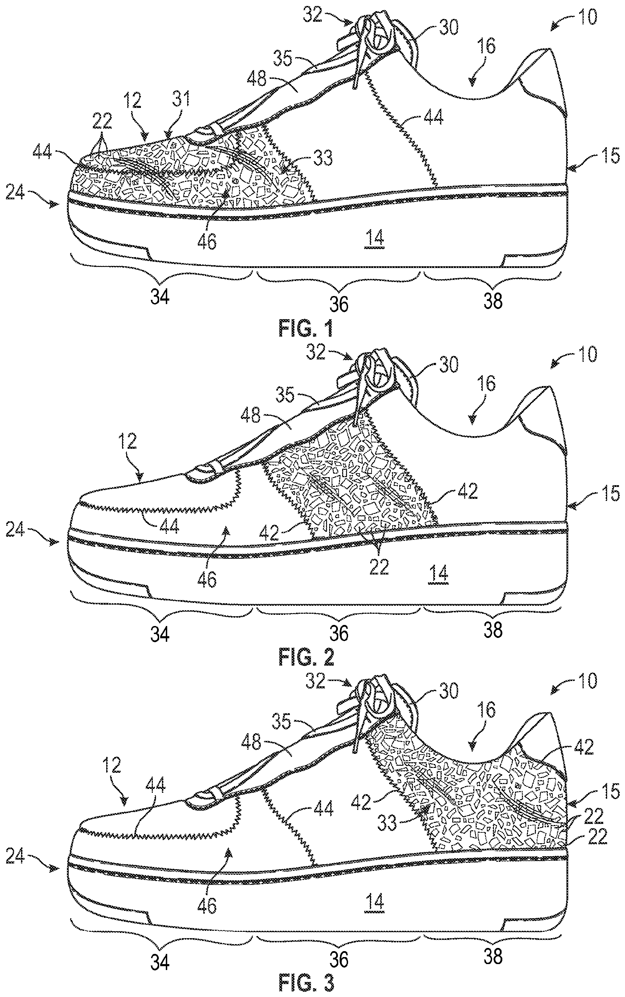

Referring to the drawings, wherein like reference numerals refer to like components throughout the several views, an article of footwear 10 is provided. As shown in FIGS. 1-8, the article of footwear 10 comprises an upper 12 fixedly attached to a sole structure 14.

The upper 12 is a portion of the article of footwear 10 that defines an interior volume or cavity 16 adapted to receive a foot of a wearer. The upper 12 in this disclosure further includes a wall 15 that at least partially surrounds the interior volume or cavity 16. For the purpose of consistency and clarity, the "interior" of the article of footwear 10 refers to space that is occupied by a wearer's foot when the article of footwear 10 is worn. The "inner side" of the wall 15 or other shoe element refers to the face of that panel or element that is (or will be) oriented toward the interior in a completed article of footwear 10. The "outer side" or "exterior" of an element refers to the face of that element that is (or will be) oriented away from the interior in a completed article of footwear 10.

As indicated in FIGS 1-6, the article of footwear 10 may be divided into a forefoot region 34, a midfoot region 36, and a heel region 38, which are likewise the forefoot region 34, the midfoot region 36, and the heel region 38, of the sole structure 14 and the upper 12 respectively. The forefoot region 34 generally includes portions of the article of footwear 10 corresponding with the toes and the joints connecting the metatarsals with the phalanges. The midfoot region 36 generally includes portions of the article of footwear 10 corresponding with the arch area and instep of the foot. The heel region 38 corresponds with rear portions of the foot, including the calcaneus bone. The forefoot region 34, the midfoot region 36, and the heel region 38 are not intended to demarcate precise areas of the footwear 10, but are instead intended to represent general areas of the footwear 10 to aid in the following discussion.

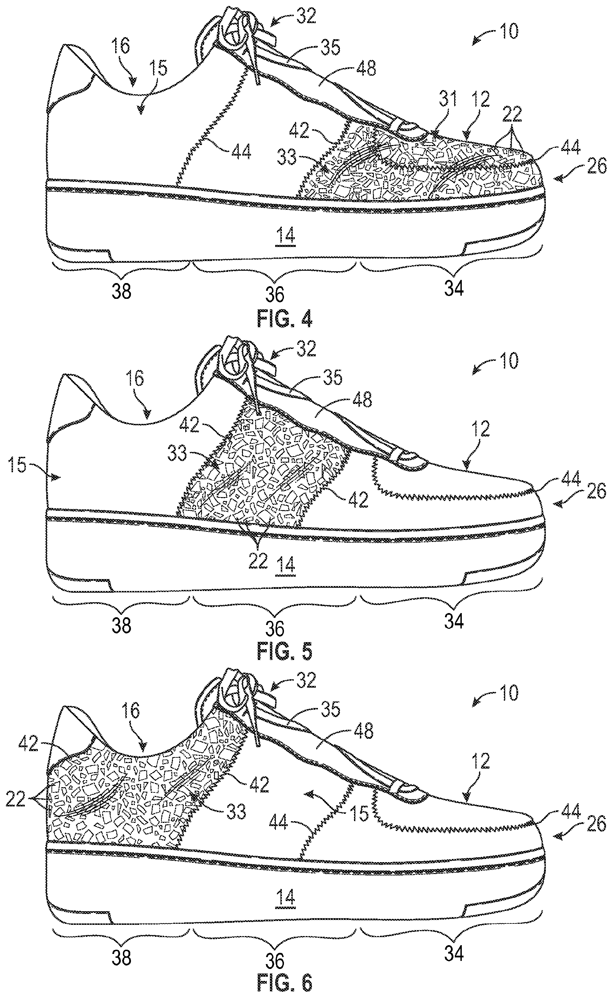

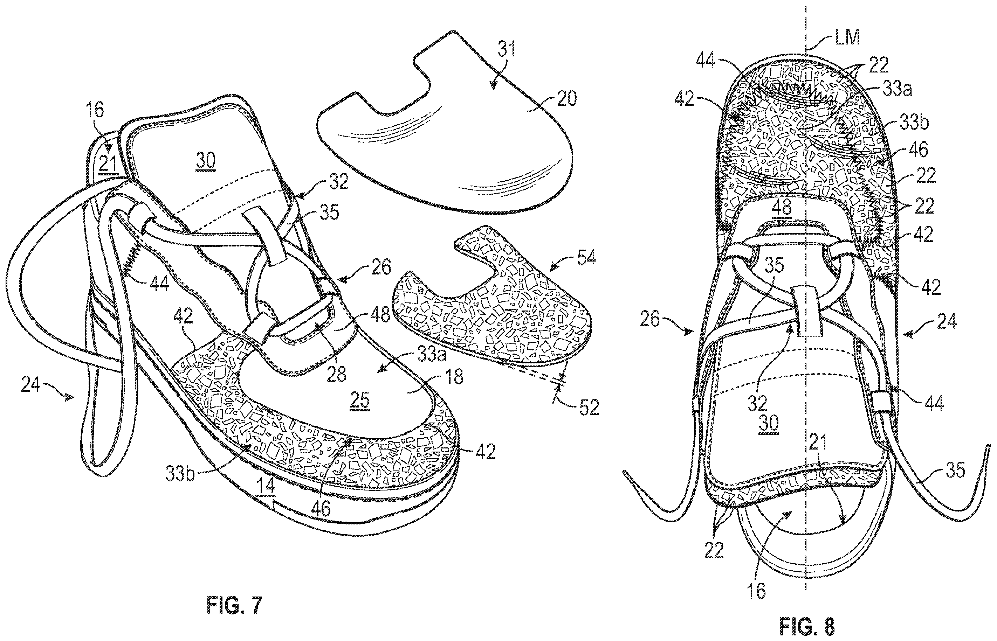

The article of footwear 10 further has a lateral side portion 24 (FIGS. 1-3) and a medial side portion 26 (FIGS. 4-6). The lateral side portion 24 and medial side 26 portion extend through each of the forefoot region 34, the midfoot region 36, and the heel region 38, and correspond with opposite sides of the article of footwear 10, each falling on an opposite side of a longitudinal midline LM of the article of footwear 10, partially indicated in FIG. 8. The medial side portion 26 is thus considered opposite to the lateral side portion 24.

The sole structure 14 may include provisions for attenuating ground reaction forces (i.e., cushioning and stabilizing the foot during vertical and horizontal loading). In addition, sole structure 14 may be configured to provide traction, impart stability, and control or limit various foot motions, such as pronation, supination, or other motions. For example, the disclosed concepts may be applicable to footwear configured for use on any of a variety of surfaces, including indoor surfaces or outdoor surfaces. In some embodiments, the sole structure 14 may be configured to provide traction and stability on hard indoor surfaces (such as hardwood); soft, natural turf surfaces; or on hard, artificial turf surfaces.

In different embodiments, the sole structure 14 may include different components, which may, individually or collectively, provide an article with a number of attributes, such as support, rigidity, flexibility, stability, cushioning, comfort, reduced weight, or other attributes. For example, the sole structure 14 may include a midsole, an outsole, and a cushioning layer and/or insole. The compressible polymer element of the sole structure 14 attenuates ground reaction forces (i.e., provides cushioning) when compressed between the foot and the ground during walking, running, or other ambulatory activities, and may be formed from a compressible polymer element, such as a thermoset or a thermoplastic, for example, a cross-linked thermosetting plastic, a cross-linked thermosetting resin, or a crosslinked thermosetting elastomer (e.g., rubber), a polyurethane foam, ethylvinylacetate (EVA) foam, an ionomeric polymer foam, or the like. In further configurations, the midsole may incorporate fluid-filled chambers, plates, moderators, or other elements that further attenuate forces, enhance stability, or influence the motions of the foot.

The midsole may be a single, one-piece midsole, or could be multiple components integrated as a unit. In some embodiments, the midsole may be integrated with the outsole as a unisole. The outsole may be one-piece, or may be several outsole components, and may be formed from a wear-resistant rubber material that may be textured to impart traction and/or may include traction elements such as cleats secured to the midsole.

When the foot is positioned within the foot-receiving interior cavity 16 of the article of footwear 10, the foot is supported on a foot-facing surface of the midsole. Optionally, the foot-facing surface of the midsole may be covered by a strobel secured to a lower region of the upper 12. Also, optionally, an insole may rest on the strobel or directly on the sole structure 14 in embodiments without a strobel, in which case the foot is supported by both the sole structure 14 and the insole.

It may be appreciated however that the sole structure 14 is not limited to incorporating traditional sole components and may incorporate various different kinds of elements arranged at the outermost, innermost, and intermediate 'layers', or locations, of the sole. Thus, the sole structure 14 can include an outer sole member or element, which may or may not coincide with a conventional 'outsole'. Likewise, the sole structure 14 may include an inner sole member or element, which may or may not be an 'insole'. Further, the sole structure 14 can include any number of intermediate and/or middle sole members or elements, which may or may not be a 'midsole'.

The sole structure 14 may be permanently and/or fixedly attached to one or more portions of the upper 12 (for example, with adhesive, stitching, welding, or other suitable techniques) and may have a configuration that extends between upper 12 and the ground. For purposes of this disclosure, the term "permanently attached" shall refer to two components joined in a manner such that the components may not be readily separated (for example, without destroying one or both of the components). In addition, two components may be "permanently attached" by virtue of being integrally formed, for example, through a molding process.

In general, the upper 12 includes provisions to reduce any tendency of the foot to be pulled away from the sole structure 14 during use. In some embodiments, the upper 12 may be a conventional upper defining and at least partially surrounding an interior volume or cavity 16 for receiving a foot of a wearer. The upper 12 may include a wall 15 that at least partially surrounds the interior volume or cavity 16 and the foot of the wearer. The wall 15 be formed of a variety of materials, such as leather, textiles, polymers, cotton, foam, composites, etc. The wall 15 may include an inner layer 18 of a material that has elasticity, breathability, or both in order to aid with foot insertion and comfort. For example, the inner layer 18 may be a polymeric material or textile material capable of providing elasticity, and may be of a braided construction, a knitted (e.g., warp-knitted) construction, or a woven construction.

The wall 15 at least partially defines the lateral side portion 24 and medial side 26 portion of the upper 12, such that upper 12 may further define a vamp 46 that extends into the forefoot region 34 and the midfoot region 36 on each of the lateral side 24 and the medial side 26 of the upper 12. The wall 15 of the upper 12 may form at least a portion of the vamp 46.

The wall 15 further defines a throat opening 28 disposed between the lateral side portion 24 (FIGS. 1-3) and the medial side portion 26 (FIGS. 4-6). The throat opening 28 may permit a wearer's foot to extend into the interior cavity 16 of the upper 12. The throat opening 28 may be bordered or surrounded by an eyestay reinforcement 48. The throat opening 28 may be further configured to house a closure system 32, such as laces 35 or the like, that may selectively couple the lateral side 24 and the medial side 26 across the throat opening 28, while providing an ability to adjust the girth of the upper 12. The closure system 32 may generally include a unitary closure panel or tongue portion 30 and a plurality of laces 35 each extending between the lateral side portion 24 and the medial side portion 26 of the wall 15. The tongue portion 30 may be integrated with or separately secured to the wall 15. The tongue portion 30 may extend over the instep region of the foot.

In other embodiments, the upper 12 may be configured to provide a 'tension fit' about a wearer's foot. As used herein, the term tension fit refers to a fit that ensures the upper is pulled against the foot at all times including on a lower side where the sole of the foot contacts a bottom portion of the upper 12. In some cases, a tension fit upper may be configured so that when no foot is present within the interior cavity 16, the interior cavity 16 has a volume that is smaller than the volume after a foot has been inserted. In other words, the upper 12 may be configured to stretch or expand as a foot is inserted. Such a configuration may provide an upper 12 that 'stays with' the foot, and especially the sole of the foot, at all times during any activities (e.g., running, jumping, walking, etc.). A tension fit may or may not require stretching in the upper 12. In some cases, the upper 12 can be configured to stretch significantly when a foot is inserted. In other cases, however, the upper 12 may simply fit the foot very snugly without significant expansion.

In the present disclosure, the upper 12 may comprise a wall 15 that at least partially surrounds the interior volume or cavity 16 and the foot of the wearer. The wall 15 may further comprise an inner layer 18 that defines the interior cavity 16 adapted to receive a foot of a wearer. In some embodiments, the inner layer 18 may include multiple discrete layers. The inner layer 18, thereby has an interior surface 21 that contacts the wearer's foot and an exterior surface 25.

The upper 12 may further include an outer layer 20 formed of a transparent or translucent material, such as a transparent or translucent textile, polymer, mesh, or the like. As used herein, a component is "sufficiently transparent" if it has a luminous transmittance (i.e., a percentage of incident light that is transmitted) of at least 80 percent and haze (i.e., percentage of transmitted light that is scattered) of not more than 56 percent. Those skilled in the art will readily understand a variety of methods to determine luminous transmittance and haze of an object, such as the outer layer 20.

The outer layer 20 further defines a surface 31, wherein the surface 31 is an outermost surface of the upper 12. The outer layer 20 may be coupled to the inner layer 18, such that a closed pocket 33 is formed between the inner layer 18 and outer layer 20 of the wall 15. In the present disclosure, the closed pocket 33 is defined as a closed void space between the inner layer 18 and the outer layer 20. The closed pocket 33 is not an open pocket within which inserts may be freely interchanged to change the outward appearance of the article of footwear 10. The closed pocket 33 is sealed, such that after the final forming of the article of footwear 10 is complete, the inner layer 18 and outer layer 20 are permanently attached, i.e., joined in a manner such that the components may not be readily separated (for example, without destroying one or both of the components).

The outer layer 20 is further coupled to and permanently attached to the inner layer 18 at a plurality of bonded area lines 42. The plurality of bonded area lines 42 are disposed in a predetermined pattern, such that the closed pocket 33 is divided into a plurality of closed pockets 33a, 33b (FIG. 7-8).

The plurality of bonded area lines 42 may be defined in multiple ways. In one example, the plurality of bonded area lines 42 may be defined as a plurality of pocket boundary stitch lines. In this way, the inner layer 18 and the outer layer 20 may be permanently attached via stitching at the bonded area lines 42, such that each of the plurality of pockets 33a, 33b is bordered along an entirety of a respective outer boundary by a stitch line. In another example, the plurality of bonded area lines 42 may be defined as a plurality of pocket boundary weld junctions. In this way, the inner layer 18 and the outer layer 20 may be permanently attached via welding, i.e., the inner layer 18 is welded to the outer layer 20 at the plurality of bonded area lines 42, such that each of the plurality of pockets 33a, 33b is bordered along an entirety of a respective outer boundary by a weld junction. In yet another example, the plurality of bonded area lines 42 may be defined as a plurality of pocket boundary baffle walls. In this way, the inner layer 18 and the outer layer 20 may be permanently attached via a baffle wall at the plurality of bonded area lines 42, such that each of the plurality of pockets 33a, 33b is bordered along an entirety of a respective outer boundary by a baffle wall that extends between the inner layer 18 and the outer layer 20. In such an example, the pocket boundary baffle walls may be comprised of the same material as the outer layer 20.

The upper 12 may further include a plurality of auxiliary stitch lines 44 that couple or permanently attach the inner layer 18 to the outer layer 20. In this way, each of the auxiliary stitch lines 44 extend between the inner layer 18 and the outer layer 20. The auxiliary stitch 44 lines are often aesthetic features of the article of footwear 10, and as such are disposed in a predetermined pattern on the upper 12. In each predetermined pattern, at least one of the auxiliary stitch lines 44 traverses at least one of the closed pockets 33a, 33b.

In the past, it was common for waste material from discarded post-consumer shoes or unsellable footwear to simply be discarded. Further, the footwear manufacturing process produces surplus material in the initial formation of an article of footwear, e.g. offcuts or scrap which were also routinely discarded. It is, therefore, desirable to incorporate these recycled, reclaimed, or re-purposed materials in the manufacture of new footwear. As such re-using or repurposing of recycled or surplus scrap materials is beneficial in both the design aspects of the article 10, as well in the sustainability of manufacturing operations.

As discussed herein, in a general sense, the article footwear 10 of the present disclosure is designed to be manufactured in an environmentally friendly and sustainable process 100, which includes techniques to incorporate a plurality of discrete pieces of scrap particulate matter 22 or "regrind" into the upper 12 of a new article of footwear 10. The "regrind" material may be one of a "grey regrind material" sourced from ground or shredded excess surplus material such as offcuts or scrap material produced during initial shoe formation, or "green regrind material" sourced from ground or shredded recycled or discarded post-consumer shoes or other unsellable footwear.

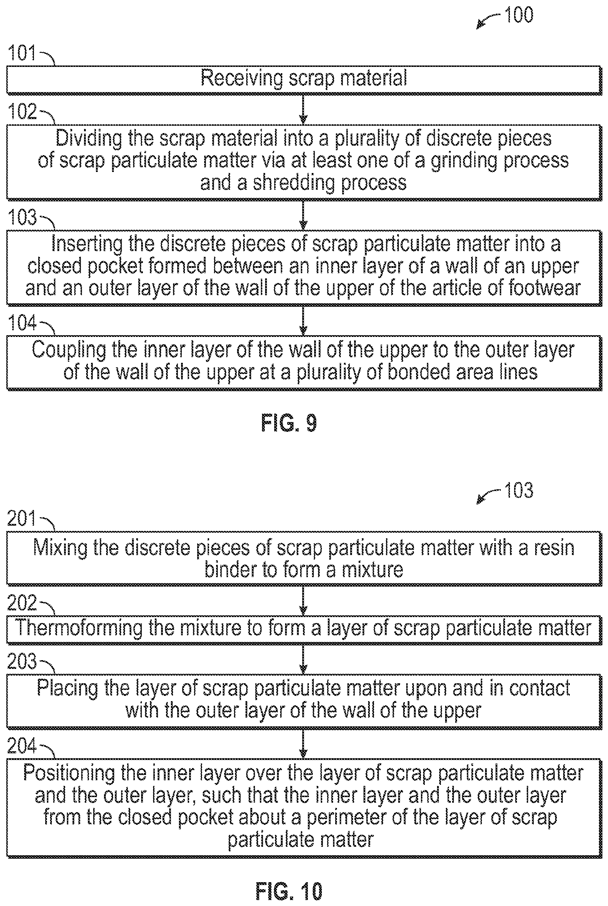

Accordingly, as detailed by the method of manufacture 100 disclosed herein and shown by example in FIGS. 1-10, scrap or surplus material from footwear manufacturing and/or recycled waste material from recycled or discarded post-consumer shoes or unsellable footwear may be utilized in the formation a newly formed article of footwear 10, to reduce material waste. In this way, scrap material may be obtained at step 101 as shown in FIG. 9. More particularly, at step 101 scrap material is obtained or harvested from a surplus material such as offcuts or scrap material produced initial shoe formation and/or from recycled or discarded waste material from post-consumer shoes or unsellable footwear.

At step 102 the scrap material may be subsequently divided into a plurality of discrete pieces of scrap particulate matter 22 or regrind material. As discussed herein, the regrind material, by definition, is material that has undergone at least one processing method and the subsequent sprue, runners, flash, or rejected parts are ground or chopped. As such, in one example, dividing the scrap material into the discrete pieces of scrap particulate matter 22 may be completed via a grinding process, i.e., inserting the scrap material into a grinding machine to produce the plurality of discrete pieces of scrap particulate matter 22. In another example, dividing the scrap material into the plurality of discrete pieces of scrap particulate matter 22 may be completed via a shredding process, i.e., inserting the scrap material into a shredding machine to produce the plurality of discrete pieces of scrap particulate matter 22.

Given that the discrete pieces of scrap particulate matter 22 or regrind is formed via a grinding process or a shredding process in step 102, the shredded or ground nature of the regrind may result in each discrete piece of scrap particulate matter 22 or regrind granule having a different shape. Said another way, the discrete pieces of scrap particulate matter 22 or regrind granules do not have a regular or normalized shape, as when the scrap material goes through a grinding machine or shredding machine there is the potential to get a wide range of granule sizes, including but not limited to fine, small dust like particles to up to 0.635 cm (0.25 inch) or
larger pieces of material. Said another way, discrete pieces of scrap particulate matter 22 or regrind granules do not have a regular or normalized shape and each discrete piece of scrap particulate matter 22 or regrind granule may have a unique and different shape. Alternate manners of creating the discrete pieces of scrap particulate matter 22 or regrind material include the techniques described in U.S. Patent No. 9,132,430.

As indicated herein, the scrap material is obtained or harvested from a surplus material such as offcuts or scrap material produced initial shoe formation and/or recycled or discarded post-consumer shoes or other unsellable footwear. In one example, the scrap material is obtained or harvested from surplus material, such as offcuts or scrap material produced during initial shoe formation of another article of footwear, such that the regrind material 22 produced at step 102 is defined a "grey regrind material". Grey regrind material may include at least one of a leather material, a textile material, a polymer material, a foam material, or elastomeric material, in the form of ground or shredded pieces of surplus material, such as offcuts or other scrap from at least one of an upper and a sole structure of another article of footwear. In an example wherein, the grey regrind material comprises pieces of surplus material from the upper of another article of footwear such as yarn, thread, tags, textiles, upper foam, leather or polymer offcuts, and the like, the grey regrind material may comprise at least one of a leather material, a textile material, and a foam material. In an example wherein, the grey regrind material comprises pieces of surplus material from the sole structure of another article of footwear, the grey regrind material may comprise at least one of a foamed-thermoplastic material or a thermoset material. Further, the grey regrind material may comprise pieces of surplus material from each of the upper and sole structure of another article of footwear.

In another example, the scrap material is obtained or harvested from recycled or discarded post-consumer shoes or unsellable footwear, such that the regrind material 22 produced at step 102 is defined a "green regrind material". Green regrind material may include at least one of a leather material, a textile material, a polymer material, a foam material, or elastomeric material, in the form of ground or shredded pieces of recycled or discarded post-consumer shoes or unsellable footwear. In an example wherein, the green regrind material comprises pieces from the upper of recycled or discarded post-consumer shoes or unsellable footwear such as yarn, thread, tags, textiles, upper foam, leather, or polymer pieces, and the like, the green regrind material may comprise at least one of a leather material, a textile material, and a foam material. In an example wherein, the green regrind material comprises pieces of the sole structure of recycled or discarded post-consumer shoes or unsellable footwear, the green regrind material may comprise at least one of a foamed-thermoplastic material or a thermoset material. Suitable examples of foamed-thermoplastic materials may include a polyurethane foam material, a Ethylene-Vinyl Acetate (EVA) foam material, an ionomeric foam material, or the like. Examples of a thermoset polymer material may include a cross-linked thermosetting plastic, a cross-linked thermosetting resin, or a cross-linked thermosetting elastomer, e.g., rubber.

Further, the green regrind material may comprise pieces from each of the upper and sole structure of recycled or discarded post-consumer shoes or unsellable footwear. The scrap particulate matter 22 or regrind material may also be formed of a combination of green regrind material and grey regrind material.

At step 103, the discrete pieces of scrap particulate matter 22, e.g., the grey regrind material, the green regrind material, or the combination thereof, are inserted between the inner layer 18 of the wall 15 of the upper 12 and the outer layer 20 of the wall 15 of the upper 12 and further dispersed throughout a closed pocket 33 formed between in the inner layer 18 and the outer layer 20. In examples wherein the closed pocket 33 is a plurality of closed pockets 33a, 33b, the discrete pieces of scrap particulate matter 22 are dispersed throughout each of the closed pockets 33a, 33b. The discrete pieces of scrap particulate matter 22 may be inserted between the inner layer 18 and the outer layer 20 and further dispersed throughout the closed pocket 33 via a variety of processes.

In one example, the regrind 22 may be sprayed or blown into the pocket 33 via a filling machine, such that each of the discrete pieces of scrap particulate matter 22 or regrind granules are free floating within the pocket 33.

In another example, as shown in steps 201-204 in FIG. 10, the scrap particulate matter 22 may be adhered together and then inserted into the closed pocket 33 in a layer formation. More particularly, at step 201, the discrete pieces of scrap particulate matter 22 may be mixed with a resin binder to form a mixture. The discrete pieces of scrap particulate matter 22 may make up from about 3% to about 15% of the mixture so that the same may be readily visible within the mixture. The mixture of resin binder and discrete pieces of scrap particulate matter 22 may be placed in a mixing container which is then placed inside of a mixing machine and mixed sufficiently to coat all outer surfaces of the discrete pieces of scrap particulate matter 22 with the resin binder. The mixture may then be removed from the mixing machine and formed into a sheet-like formation having a thickness 52.

At step 202, the sheet-like formation of mixture may be placed in a dryer for 30 minutes at 80 degrees Celsius, for example. Once dried, the sheet-like formation may be compression molded or thermoformed to produce a layer of scrap particulate matter 54 having the thickness 52, as shown in FIG. 7.

At step 203, the layer of scrap particulate matter 54 may be placed upon and in contact with the outer layer 20. At step 204, the inner layer 18 may be positioned over the layer of scrap particulate matter 54 and the outer layer 20, such that the inner layer 18 and the outer layer 20 form the closed pocket 33 about a perimeter or outer boundary of the layer of scrap particulate matter 54, such that the layer of scrap particulate matter 54 is disposed within the closed pocket 33.

At step 104, the outer layer 20 may be further coupled to and permanently attached to the inner layer 18 at a plurality of bonded area lines 42. The plurality of bonded area lines 42 may be disposed in a predetermined pattern, such that the closed pocket 33 and the layer of scrap particulate matter 54 are enclosed by the bonded area lines 42.

The plurality of bonded area lines 42 may be defined in multiple ways. In one example, the plurality of bonded area lines 42 may be defined as a plurality of pocket boundary stitch lines, such that coupling the inner layer 18 of the wall 15 of the upper 12 to the outer layer 20 of the wall 15 of the upper includes stitching the inner layer 18 to the outer layer 20 at each of the plurality of bonded area lines 42, such that each of the bonded area lines is defined as a stitch line and each of the plurality of pockets 33a, 33b is bordered along an entirety of a respective outer boundary by a stitch line.

In another example, the plurality of bonded area lines 42 may be defined as a plurality of pocket boundary adhesive junctions, such that coupling the inner layer 18 of the wall 15 of the upper 12 to the outer layer 20 of the wall 15 of the upper 12 includes applying an adhesive to one of the inner layer 18 and the outer layer 20 at the bonded area lines 42, and joining the inner layer 18 and the outer layer 20 at the bonded area lines 42.

In another example, the plurality of bonded area lines 42 may be defined as a plurality of pocket boundary weld junctions. In this way, the inner layer 18 and the outer layer 20 may be permanently attached via welding, i.e., the inner layer 18 is welded to the outer layer 20 at the plurality of bonded area lines 42, such that each of the plurality of pockets 33 is bordered along an entirety of a respective outer boundary by a weld junction. As utilized herein, the term "welding" or variants thereof (such as "thermal bonding") is defined as a technique for securing two elements to one another that involves a softening or melting of a polymer material within at least one of the elements such that the materials of the elements are secured to each other when cooled. Similarly, the term "weld" or variants thereof (e.g., "thermal bond") is defined as the bond, link, or structure that joins two elements through a process that involves a softening or melting of a polymer material within at least one of the elements such that the materials of the elements are secured to each other when cooled.

Welding generally produces a heat-affected zone in which the materials of the two joined components are intermingled. This heat-affected zone may be considered a "weld" or "thermal bond." Further, welding may involve (a) the melting or softening of two layers that include polymer materials, such that the polymer materials from each layer intermingle with each other (e.g., diffuse across a boundary layer between the polymer materials) and are secured together when cooled, as well as (b) the melting or softening a polymer material in a first layer such that the polymer material extends into or infiltrates the structure of a second layer (e.g., infiltrates crevices or cavities formed in the second layer or extends around or bonds with filaments or fibers in the second layer) to secure the layers together when cooled. Further, welding may occur when only one layer includes a polymer material, when both layers include polymer materials, or when a polymer material or resin is disposed between the respective layers.

In one embodiment, to effectuate the weld, a resin binder is applied to the inner layer 18 at each of the bonded area lines 42, the resin binder is heated to a viscous state, such that the resin binder infiltrates the inner layer 18 and the outer layer 20 at each of the plurality of bonded area lines 42, and the resin binder is cooled to a solid state.

In another embodiment, wherein the one of the inner layer 18 and the outer layer 20 is formed of a thermoplastic material, to effectuate the weld, the respective layer 18, 20 formed of the thermoplastic material is heated to a viscous state, such that the thermoplastic layer infiltrates the other of the inner layer 18 and the outer layer 20 at the plurality of bonded area lines 42, and the thermoplastic layer is cooled to a solid state.

The layer of scrap particulate matter 54 is disposed between the inner layer 18 and the outer layer 20 and dispersed throughout the closed pocket 33. In this way, the layer of scrap particulate matter 54 is positioned on the upper 12 in the location of the respective closed pocket 33. As shown in FIGS. 1-6, the closed pocket 33 may be disposed in any one of or each of the forefoot region 34, the midfoot region 36, the heel region 38, and the tongue portion 30 of the upper 12.

In one example, the closed pocket 33 may be disposed in the forefoot region 34 (FIGS. 1, 4, 7, and 8). In another example, the closed pocket 33 may be disposed in the midfoot region 36 (FIGS. 2 and 5). In another example, the closed pocket 33 may be disposed in the heel region 38 (FIGS. 3 and 6). In another example, the closed pocket 33 may be disposed in the tongue portion 30 (FIGS. 8).

In one particular example embodiment (FIGS. 1, 4, 7, and 8), the wall 15 of the upper 12 at least partially defines a vamp 46 that extends into the forefoot region 34 and the midfoot region 36 on each of the lateral side 24 and the medial side 26 of the upper 12. In such an example, the closed pocket 33 may be positioned or disposed in the vamp 46. In a similar example, wherein the closed pocket 33 is a plurality of closed pockets (FIGS. 7-8), each of the plurality of closed pockets 33a, 33b is disposed in the vamp 46.

Irrespective of where the closed pocket 33 is positioned on the upper 12, due to the transparent and/or translucent nature of the outer layer 20, the layer of scrap particulate matter 54, once positioned between the inner layer 18 and outer layer 20 is at least partially visible through the outer layer 20. Said another way, the outer layer 20 is formed of a sufficiently transparent material, such that the layer of scrap particulate matter 54 is at least partially visible through the outer layer 20. In this way, the scrap particulate matter 22, e.g., the grey regrind material, the green regrind material, or the combination thereof, may be readily seen by viewers or wearers of the article of footwear 10 to showcase not only the desirable and unique aesthetic design, but also the sustainable and environmentally conscience method of manufacture 100, wherein scrap material, manufacturing surplus material, or recycled or reclaimed material from a discarded or unsellable footwear application, is utilized in the formation of a newly-formed shoe, to reduce material waste.

In addition to providing a means of recycling and reusing the material from post-consumer shoes and reclaiming surplus material from initial shoe formation, the present techniques provide the upper with a more breathable and cushioned structure. Said another way, instead of simply being a solid foam pad, pelletized grey regrind material or pelletized green regrind material can permit air and/or evaporated sweat to pass between the discrete granules, which can improve the comfort of the upper. Additionally, because grey regrind material and green regrind material respectively, can each originate from materials of varying colors, the present techniques permit a shoe construction where the visible appearance of each shoe is unique. The uniqueness is attributable to the random dispersion of the regrind throughout the closed pocket 33. More specifically, each shoe 10 may take on a different appearance based on the available colors of regrind at the time of manufacture together with the dispersion process. This could promote an added consumer desirability for shoes that achieve aesthetically pleasing or unique designs or that have creative patterns or colors.

The detailed description and the drawings or figures are supportive and descriptive of the present teachings, but the scope of the present teachings is defined solely by the claims. While some of the best modes and other embodiments for carrying out the present teachings have been described in detail, various alternative designs and embodiments exist for practicing the present teachings defined in the appended claims.

While various embodiments have been described, the description is intended to be exemplary, rather than limiting and it will be apparent to those of ordinary skill in the art that many more embodiments and implementations are possible that are within the scope of the embodiments. Any feature of any embodiment may be used in combination with or substituted for any other feature or element in any other embodiment unless specifically restricted.

## Claims

1. An article of footwear (10) comprising:
a sole structure (14); and
an upper (12) fixedly attached to the sole structure (14), the upper (12) including a wall (15) that at least partially surrounds an interior volume (16) operative to receive a foot of a wearer, wherein the wall (15) comprises:
an inner layer (18);
an outer layer (20) coupled to the inner layer (18), such that the inner layer (18) and the outer layer (20) define a closed pocket (33) therebetween;
a layer of scrap particulate matter (54) comprising at least one of a green regrind material or a grey regrind material, wherein the layer of scrap particulate matter (54) is disposed between the inner layer (18) and the outer layer (20) and dispersed throughout the closed pocket (33); and
wherein the outer layer (20) is formed of an at least partially transparent material, such that the layer of scrap particulate matter (54) is at least partially visible through the outer layer (20),
wherein the outer layer (20) is coupled to the inner layer (18) at a plurality of bonded area lines (42), wherein the plurality of bonded area lines (42) is disposed in a predetermined pattern such that the closed pocket (33) is divided into a plurality of closed pockets (33a, 33b), wherein the closed pocket (33) is not an open pocket within which inserts are freely interchanged to change the outward appearance of the article of footwear (10).

2. The article of footwear (10) of claim 1, wherein the layer of scrap particulate matter (54) comprises a plurality of discrete pieces of scrap particulate matter (22), and wherein the discrete pieces of scrap particulate matter (22) are defined as at least one of ground pieces at least one of the grey regrind material or the green regrind material or shredded pieces of the grey regrind material or the green regrind material, particularly wherein each discrete piece of scrap particulate matter (22) has a different shape.

3. The article of footwear (10) of any of claim 2, wherein the plurality of discrete pieces of scrap particulate matter (22) is a plurality of discrete pieces of the grey regrind material, wherein the discrete pieces of the grey regrind material comprise surplus material from an upper of another article of footwear, and wherein the discrete pieces of the grey regrind material comprise at least one of a leather material, a textile material, a polymer material, or a foam material.

4. The article of footwear (10) of claim 2, wherein the plurality of discrete pieces of scrap particulate matter (22) is a plurality of discrete pieces of the grey regrind material, wherein the discrete pieces of the grey regrind material comprise surplus material from a sole structure of another article of footwear, and wherein the discrete pieces of the grey regrind material are formed of at least one of a foamed-thermoplastic material or a thermoset material,
or wherein the plurality of discrete pieces of scrap particulate matter (22) is a plurality of discrete pieces of the green regrind material, wherein the discrete pieces of the green regrind material comprise recycled material from an upper of another article of footwear, and wherein the discrete pieces of the green regrind material comprise discrete pieces of at least one of a leather material, a textile material, a polymer material, or a foam material.

5. The article of footwear (10) of any of claim 2, wherein the plurality of discrete pieces of scrap particulate matter (22) is a plurality of discrete pieces of the green regrind material, wherein the discrete pieces of the green regrind material comprise recycled material from a sole structure of another article of footwear, and wherein the discrete pieces of the green regrind material comprise at least one of a foamed-thermoplastic material or a thermoset material.

6. The article of footwear (10) of any of claims 2-5, wherein the layer of scrap particulate matter (54) further comprises a resin binder, wherein each of the discrete pieces of scrap particulate matter (22) are secured to one another via the resin binder.

7. The article of footwear (10) of any of claims 1-6 wherein:
the upper (12) has a lateral side (24) and a medial side (26) and further defines a forefoot region (34), a midfoot region (36), and a heel region (38);
each of the lateral side (24) and the medial side (26) extend into the forefoot region (34), the midfoot region (36), and the heel region (38);
the upper (12) further defines a vamp (46) that extends into the forefoot region (34) and the midfoot region (36) on each of the lateral side (24) and the medial side (26);
the wall (15) forms at least a portion of the vamp (46); and the closed pocket (33) is disposed in the vamp (46),
particularly wherein the plurality of bonded area lines (42) is defined at least one of a plurality of pocket boundary stitch lines, a plurality of pocket boundary weld junctions, or a plurality of pocket boundary baffle walls extending between the inner layer (18) and the outer layer (20), further particularly wherein:
a plurality of auxiliary stitch lines (44) extends between the inner layer (18) and the outer layer (20);
the plurality of auxiliary stitch lines (44) is disposed in a predetermine pattern; and
one of the auxiliary stitch lines (44) traverses the closed pocket (33).

8. A method of manufacturing an article of footwear (10), the method of manufacturing comprising:
inserting a plurality of discrete pieces of scrap particulate matter (22) into a closed pocket (33) formed between an inner layer (18) of a wall (15) of an upper (12) and an outer layer (20) of the wall (15) of the upper (12) of the article of footwear (10); wherein the outer layer (20) is formed of an at least partially-transparent material, such that the discrete pieces of scrap particulate matter (22) is at least partially visible through the outer layer (20);
coupling the inner layer (18) of the wall of the upper to the outer layer (20) of the wall of the upper (12) at a plurality of bonded area lines (42), wherein the plurality of bonded area lines (42) is disposed in a predetermined pattern such that the closed pocket (33) is divided into a plurality of closed pockets (33a, 33b), wherein the closed pocket (33) is not an open pocket within which inserts are freely interchanged to change the outward appearance of the article of footwear (10).

9. The method of claim 8 further comprising:
receiving scrap material; and
dividing the scrap material into a plurality of discrete pieces of scrap particulate matter (22) via at least one of a grinding process and a shredding process, such that each discrete piece of scrap particulate matter (22) has a different shape.

10. The method of any of claims 8-9 further comprising:
mixing the discrete pieces of scrap particulate matter (22) with a resin binder, such that the discrete pieces of scrap particulate matter (22) and the resin binder collectively define a mixture; and
thermoforming the mixture to into a layer of scrap particulate matter (54).

11. The method of claim 10 wherein inserting the plurality of discrete pieces of scrap particulate matter (22) into the closed pocket (33) defined between an inner layer (18) and an outer layer (20) further comprises:
placing the layer of scrap particulate matter (54) upon and in contact with the outer layer (20); and
positioning the inner layer (18) over the layer of scrap particulate matter (54) and the outer layer (20), such that the inner layer (18) and the outer layer (20) define the closed pocket (33) about a perimeter of the layer of scrap particulate matter (54), such that the layer of scrap particulate matter (54) is disposed within the closed pocket (33).

12. The method of claim 11, wherein:
the bonded area lines (42) surround the closed pocket (33) and the layer of scrap particulate matter (54), such that the closed pocket (33) is enclosed by the bonded area lines (42); and
wherein coupling the inner layer (18) of the wall (15) of the upper (12) to the outer layer (20) of the wall (15) of the upper (12) is performed via hot pressing the inner layer (18) to the outer layer (20).

13. The method of claim 12 wherein:
the plurality of discrete pieces of scrap particulate matter (22) is a plurality of discrete pieces of a grey regrind material;
the discrete pieces of the grey regrind material comprise surplus material from the formation of an upper of another article of footwear; and
the discrete pieces of the grey regrind material comprise at least one of a leather material, a textile material, a polymer material, or a foam material, or wherein:
the plurality of discrete pieces of scrap particulate matter (22) is a plurality of discrete pieces of a grey regrind material;
the discrete pieces of the grey regrind material comprise surplus material from the formation of a sole structure of another article of footwear; and
the discrete pieces of the grey regrind material are formed of at least one of a foamed-thermoplastic material or a thermoset material.

14. The method of claim 12 wherein:
the plurality of discrete pieces of scrap particulate matter (22) is a plurality of discrete pieces of a green regrind material;
the discrete pieces of the green regrind material comprise recycled material from an upper of another article of footwear; and
the discrete pieces of the green regrind material comprise discrete pieces of at least one of a leather material, a textile material, a polymer material, or a foam material.

15. The method of claim 12 wherein:
the plurality of discrete pieces of scrap particulate matter (22) is a plurality of discrete pieces of a green regrind material;
the discrete pieces of the green regrind material comprise recycled material from a sole structure of another article of footwear; and
the discrete pieces of the green regrind material comprise at least one of a foamed-thermoplastic material or a thermoset material.

## Patentansprüche

1. Schuhwerkartikel (10), umfassend:
eine Sohlenstruktur (14); und
ein Oberteil (12), das fest an der Sohlenstruktur (14) angebracht ist, wobei das Oberteil (12) eine Wand (15) enthält, die zumindest teilweise ein Innenvolumen (16) umgibt, das wirksam ist, einen Fuß eines Trägers aufzunehmen, wobei die Wand (15) umfasst:
eine Innenschicht (18);
eine Außenschicht (20), die mit der Innenschicht (18) gekoppelt ist, sodass die Innenschicht (18) und die Außenschicht (20) eine geschlossene Tasche (33) zwischen sich definieren;
eine Schicht von Ausschusspartikelmasse (54), die zumindest eines von einem grünen Regeneratmaterial oder einem grauen Regeneratmaterial umfasst, wobei die Schicht von Ausschusspartikelmasse (54) zwischen der Innenschicht (18) und der Außenschicht (20) angeordnet und in der gesamten geschlossenen Tasche (33) verteilt ist; und
wobei die Außenschicht (20) aus einem zumindest teilweise transparenten Material gebildet ist, sodass die Schicht von Ausschusspartikelmasse (54) zumindest teilweise durch die Außenschicht (20) hindurch sichtbar ist,
wobei die Außenschicht (20) an einer Mehrzahl von Verbindungsbereichslinien (42) mit der Innenschicht (18) gekoppelt ist, wobei die Mehrzahl von Verbindungsbereichslinien (42) in einem vorbestimmten Muster angeordnet ist, sodass die geschlossene Tasche (33) in eine Mehrzahl von geschlossenen Taschen (33a, 33b) unterteilt ist, wobei die geschlossene Tasche (33) keine offene Tasche ist, in der Einsätze frei ausgetauscht sind bzw. werden, um das äußere Erscheinungsbild des Schuhwerkartikels (10) zu verändern.

2. Schuhwerkartikel (10) nach Anspruch 1, wobei die Schicht von Ausschusspartikelmasse (54) eine Mehrzahl von einzelnen Stücken von Ausschusspartikelmasse (22) umfasst, und wobei die einzelnen Stücke von Ausschusspartikelmasse (22) als zumindest eines von gemahlenen Stücken von zumindest einem des grauen Regeneratmaterials oder des grünen Regeneratmaterials oder geschredderten Stücken des grauen Regeneratmaterials oder des grünen Regeneratmaterials definiert sind, insbesondere wobei jedes einzelne Stück von Ausschusspartikelmasse (22) eine unterschiedliche Form aufweist.

3. Schuhwerkartikel (10) nach einem von Anspruch 2, wobei die Mehrzahl von einzelnen Stücken von Ausschusspartikelmasse (22) eine Mehrzahl von einzelnen Stücken des grauen Regeneratmaterials sind, wobei die einzelnen Stücke des grauen Regeneratmaterials überschüssiges Material von einem Oberteil eines anderen Schuhwerkartikels umfassen und wobei die einzelnen Stücke des grauen Regeneratmaterials zumindest eines von einem Ledermaterial, einem Textilmaterial, einem Polymermaterial oder einem Schaummaterial umfassen.

4. Schuhwerkartikel (10) nach Anspruch 2, wobei die Mehrzahl von einzelnen Stücken von Ausschusspartikelmasse (22) eine Mehrzahl von einzelnen Stücken des grauen Regeneratmaterials ist, wobei die einzelnen Stücke des grauen Regeneratmaterials überschüssiges Material von einer Sohlenstruktur eines anderen Schuhwerkartikels umfassen und wobei die einzelnen Stücke des grauen Regeneratmaterials aus zumindest einem eines geschäumten thermoplastischen Materials oder eines duroplastischen Materials gebildet sind; oder wobei die Mehrzahl von einzelnen Stücken von Ausschusspartikelmasse (22) eine Mehrzahl von einzelnen Stücken des grünen Regeneratmaterials ist, wobei die einzelnen Stücke des grünen Regeneratmaterials recyceltes Material von einem Oberteil eines anderen Schuhwerks umfassen und wobei die einzelnen Stücke des grünen Regeneratmaterials einzelne Stücke von zumindest einem eines Ledermaterials, eines Textilmaterials, eines Polymermaterials oder eines Schaummaterial umfassen.

5. Schuhwerkartikel (10) nach einem von Anspruch 2, wobei die Mehrzahl von einzelnen Stücken von Ausschusspartikelmasse (22) eine Mehrzahl von einzelnen Stücken des grünen Regeneratmaterials ist, wobei die einzelnen Stücke des grünen Regeneratmaterials recyceltes Material von einer Sohlenstruktur eines anderen Schuhwerkartikels umfassen, und wobei die einzelnen Stücke des grünen Regeneratmaterials zumindest eines von einem geschäumten thermoplastischen Material oder einem duroplastischen Material umfassen.

6. Schuhwerkartikel (10) nach einem der Ansprüche 2-5, wobei die Schicht von Ausschusspartikelmasse (54) ferner ein Harzbindemittel umfasst, wobei jedes der einzelnen Stücke von Ausschusspartikelmasse (22) über das Harzbindemittel miteinander verbunden bzw. befestigt sind.

7. Schuhwerkartikel (10) nach einem der Ansprüche 1-6, wobei:
das Oberteil (12) eine laterale Seite (24) und eine mediale Seite (26) aufweist und ferner einen Vorderfußbereich (34), einen Mittelfußbereich (36) und einen Fersenbereich (38) definiert;
sich jede der lateralen Seite (24) und der medialen Seite (26) in den Vorderfußbereich (34), den Mittelfußbereich (36) und den Fersenbereich (38) hinein erstreckt;
das Oberteil (12) ferner ein Blatt (46) definiert, das sich in den Vorderfußbereich (34) und den Mittelfußbereich (36) auf jeder der lateralen Seite (24) und der medialen Seite (26) hinein erstreckt;
die Wand (15) zumindest einen Abschnitt des Blatts (46) bildet; und die geschlossene Tasche (33) in dem Blatt (46) angeordnet ist,
insbesondere wobei die Mehrzahl von Verbindungsbereichslinien (42) definiert ist als zumindest eine einer Mehrzahl von Taschenbegrenzungsstichlinien, eine Mehrzahl von Taschenbegrenzungsschweißverbindungen oder eine Mehrzahl von Taschenbegrenzungsprall- bzw. -leitwänden, die sich zwischen der Innenschicht (18) und der Außenschicht (20) erstrecken, ferner insbesondere wobei:
sich eine Mehrzahl von Hilfsstichlinien (44) zwischen der Innenschicht (18) und der Außenschicht (20) erstreckt;
die Mehrzahl von Hilfsstichlinien (44) in einem vorbestimmten Muster angeordnet ist; und
eine der Hilfsstichlinien (44) durch die geschlossene Tasche (33) verläuft.

8. Verfahren zum Herstellen eines Schuhwerkartikels (10), wobei das Verfahren zum Herstellen umfasst:
Einsetzen einer Mehrzahl von einzelnen Stücken von Ausschusspartikelmasse (22) in eine geschlossene Tasche (33), die zwischen einer Innenschicht (18) einer Wand (15) eines Oberteils (12) und einer Außenschicht (20) der Wand (15) des Oberteils (12) des Schuhwerkartikels (10) ausgebildet ist; wobei die Außenschicht (20) aus einem zumindest teilweise transparenten Material gebildet ist, sodass die einzelnen Stücke von Ausschusspartikelmasse (22) zumindest teilweise durch die Außenschicht (20) hindurch sichtbar sind;
Koppeln der Innenschicht (18) der Wand des Oberteils mit der Außenschicht (20) der Wand des Oberteils (12) an einer Mehrzahl von Verbindungsbereichslinien (42), wobei die Mehrzahl von Verbindungsbereichslinien (42) in einem vorbestimmten Muster angeordnet ist, sodass die geschlossene Tasche (33) in eine Mehrzahl von geschlossenen Taschen (33a, 33b) unterteilt ist, wobei die geschlossene Tasche (33) keine offene Tasche ist, in der Einsätze frei ausgetauscht sind bzw. werden, um das äußere Erscheinungsbild des Schuhwerkartikels (10) zu verändern.

9. Verfahren nach Anspruch 8, ferner umfassend:
Aufnehmen von Ausschussmaterial; und
Teilen des Ausschussmaterials in eine Mehrzahl von einzelnen Stücken von Ausschusspartikelmasse (22) durch zumindest einen eines Mahlprozesses und eines Schredderprozesses, sodass jedes einzelne Stück von Ausschusspartikelmasse (22) eine unterschiedliche Form aufweist.

10. Verfahren nach einem der Ansprüche 8-9, ferner umfassend:
Mischen der einzelnen Stücke von Ausschusspartikelmasse (22) mit einem Harzbindemittel, sodass die einzelnen Stücke von Ausschusspartikelmasse (22) und das Harzbindemittel kollektiv eine Mischung bilden; und Thermoformen der Mischung zu einer Schicht von Ausschusspartikelmasse (54).

11. Verfahren nach Anspruch 10, wobei das Einsetzen der Mehrzahl von einzelnen Stücken von Ausschusspartikelmasse (22) in die geschlossene Tasche (33), die zwischen einer Innenschicht (18) und einer Außenschicht (20) definiert ist, ferner umfasst:
Platzieren der Schicht von Ausschusspartikelmasse (54) auf und in Kontakt mit der Außenschicht (20); und
Positionieren der Innenschicht (18) über der Schicht von Ausschusspartikelmasse (54) und der Außenschicht (20), sodass die Innenschicht (18) und die Außenschicht (20) die geschlossene Tasche (33) um einen Umfang der Schicht von Ausschusspartikelmasse (54) herum definieren, sodass die Schicht von Ausschusspartikelmasse (54) innerhalb der geschlossenen Tasche (33) angeordnet ist.

12. Verfahren nach Anspruch 11, wobei:
die Verbindungsbereichslinien (42) die geschlossene Tasche (33) und die Schicht von Ausschusspartikelmasse (54) umgeben, sodass die geschlossene Tasche (33) durch die Verbindungsbereichslinien (42) eingeschlossen ist; und
wobei das Koppeln der Innenschicht (18) der Wand (15) des Oberteils (12) mit der Außenschicht (20) der Wand (15) des Oberteils (12) durch Heißpressen der Innenschicht (18) mit der Außenschicht (20) durchgeführt wird.

13. Verfahren nach Anspruch 12, wobei:
die Mehrzahl von einzelnen Stücken von Ausschusspartikelmasse (22) eine Mehrzahl von einzelnen Stücken eines grauen Regeneratmaterials ist;
die einzelnen Stücke des grauen Regeneratmaterials überschüssiges Material aus der Bildung eines Oberteils eines anderen Schuhwerkartikels umfassen; und
die einzelnen Stücke des grauen Regeneratmaterials zumindest eines von einem Ledermaterial, einem Textilmaterial, einem Polymermaterial oder einem Schaummaterial umfassen, oder wobei:
die Mehrzahl von einzelnen Stücken von Ausschusspartikelmasse (22) eine Mehrzahl von einzelnen Stücken eines grauen Regeneratmaterials ist;
die einzelnen Stücke des grauen Regeneratmaterials überschüssiges Material aus der Bildung einer Sohlenstruktur eines anderen Schuhwerkartikels umfassen; und
die einzelnen Stücke des grauen Regeneratmaterials aus zumindest einem eines geschäumten thermoplastischen Materials oder eines duroplastischen Materials gebildet werden.

14. Verfahren nach Anspruch 12, wobei:
die Mehrzahl von einzelnen Stücken von Ausschusspartikelmasse (22) eine Mehrzahl von einzelnen Stücken eines grünen Regeneratmaterials ist;
die einzelnen Stücke des grünen Regeneratmaterials recyceltes Material von einem Oberteil eines anderen Schuhwerksartikels umfassen; und
die einzelnen Stücke des grünen Regeneratmaterials einzelne Stücke von zumindest einem von einem Ledermaterial, einem Textilmaterial, einem Polymermaterial oder einem Schaummaterial umfassen.

15. Verfahren nach Anspruch 12, wobei:
die Mehrzahl von einzelnen Stücken von Ausschusspartikelmasse (22) eine Mehrzahl von einzelnen Stücken eines grünen Regeneratmaterials ist;
die einzelnen Stücke des grünen Regeneratmaterials recyceltes Material von einer Sohlenstruktur eines anderen Schuhwerkartikels umfassen; und
die einzelnen Stücke des grünen Regeneratmaterials zumindest eines von einem geschäumten thermoplastischen Material oder einem duroplastischen Material umfassen.

## Revendications

1. Article chaussant (10), comprenant :
une structure de semelle (14) ; et
une tige (12) attachée de manière fixe à la structure de la semelle (14), la tige (12) comportant une paroi (15) qui entoure au moins partiellement un volume intérieur (16) destiné à recevoir le pied d'un porteur, dans lequel la paroi (15) comprend :
une couche intérieure (18) ;
une couche extérieure (20) accouplée à la couche intérieure (18), de sorte que la couche intérieure (18) et la couche extérieure (20) définissent une poche fermée (33) entre elles ;
une couche de matières particulaires de rebut (54) comprenant au moins un matériau rebroyé vert ou un matériau rebroyé gris, dans lequel la couche de matières particulaires de rebut (54) est disposée entre la couche intérieure (18) et la couche extérieure (20) et dispersée dans l'ensemble de la poche fermée (33) ; et
dans lequel la couche extérieure (20) est formée d'au moins un matériau partiellement transparent, de sorte que la couche de matières particulaires de rebut (54) est au moins partiellement visible à travers la couche extérieure (20),
dans lequel la couche extérieure (20) est accouplée à la couche intérieure (18) au niveau d'une pluralité de lignes de zone de liaison (42), dans lequel la pluralité de lignes de zone de liaison (42) est disposée selon un motif prédéterminé de sorte que la poche fermée (33) est divisée en une pluralité de poches fermées (33a, 33b), dans lequel la poche fermée (33) n'est pas une poche ouverte à l'intérieur de laquelle les inserts sont librement interchangés pour modifier l'aspect extérieur de l'article chaussant (10).

2. Article chaussant (10) selon la revendication 1, dans lequel la couche de matières particulaires de rebut (54) comprend une pluralité de morceaux distincts de matières particulaires de rebut (22), et dans lequel les morceaux distincts de matières particulaires de rebut (22) sont définis comme étant au moins un des morceaux broyés, au moins un parmi le matériau rebroyé gris ou le matériau rebroyé vert ou des morceaux déchiquetés du matériau rebroyé gris ou du matériau rebroyé vert, en particulier dans lequel chaque morceau distinct de matières particulaires de rebut (22) a une forme différente.

3. Article chaussant (10) selon l'une quelconque de la revendication 2, dans lequel la pluralité de morceaux distincts de matières particulaires de rebut (22) est une pluralité de morceaux distincts du matériau rebroyé gris, dans lequel les morceaux distincts du matériau rebroyé gris comprennent un surplus de matériau provenant d'une tige d'un autre article chaussant, et dans lequel les morceaux distincts du matériau rebroyé gris comprennent au moins un matériau de cuir, un matériau textile, un matériau polymère, ou un matériau de mousse.

4. Article chaussant (10) selon la revendication 2, dans lequel la pluralité de pièces distinctes de matières particulaires de rebut (22) est une pluralité de pièces distinctes du matériau rebroyé gris, dans lequel les morceaux distincts du matériau rebroyé gris comprennent un matériau de surplus provenant d'une structure de semelle d'un autre article chaussant, et dans lequel les morceaux distincts du matériau rebroyé gris sont formées d'au moins un parmi un matériau thermoplastique moussé ou un matériau thermodurcissable,
ou dans lequel la pluralité de morceaux distincts de déchets de matières particulaires (22) est une pluralité de morceaux distincts du matériau rebroyé vert, dans lequel les morceaux distincts du matériau rebroyé vert comprennent un matériau recyclé provenant d'une tige d'un autre article chaussant, et dans lequel les morceaux distincts du matériau rebroyé rebroyé comprennent des morceaux distincts d'au moins un matériau en cuir, un matériau en textile, un matériau en polymère ou un matériau en mousse.

5. Article chaussant (10) selon l'une quelconque de la revendication 2, dans lequel la pluralité de pièces distinctes de matières particulaires de rebut (22) est une pluralité de pièces distinctes du matériau rebroyé vert, dans lequel les morceaux distincts du matériau de rebroyé vert comprennent un matériau recyclé provenant d'une structure de semelle d'un autre article chaussant, et dans lequel les morceaux distincts du matériau rebroyé vert comprennent au moins un matériau thermoplastique moussé ou un matériau thermodurcissable.

6. Article chaussant (10) selon l'une quelconque des revendications 2 à 5, dans lequel la couche de matières particulaires de rebut (54) comprend en outre un liant en résine, dans lequel chacune des pièces distinctes de matières particulaires de rebut (22) est fixée l'une à l'autre par l'intermédiaire du liant en résine.

7. Article chaussant (10) selon l'une quelconque des revendications 1 à 6, dans lequel :
la tige (12) a un côté latéral (24) et un côté médial (26) et définit en outre une région de l'avant-pied (34), une région du milieu du pied (36) et une région du talon (38) ;
chacun du côté latéral (24) et du côté médial (26) s'étend dans la région de l'avant-pied (34), la région du milieu du pied (36) et la région du talon (38) ;
la tige (12) définit en outre une empeigne (46) qui s'étend dans la région de l'avant-pied (34) et la région du milieu de pied (36) sur le côté latéral (24) et le côté médial (26) ;
la paroi (15) forme au moins une partie de l'empeigne (46) ; et la poche fermée (33) est disposée dans l'empeigne (46),
en particulier, dans lequel la pluralité de lignes de zone collées (42) sont définies au moins par une pluralité de lignes de couture de limite de poche, une pluralité de jonctions de soudure de limite de poche, ou une pluralité de parois de déflecteur de limite de poche s'étendant entre la couche intérieure (18) et la couche extérieure (20), en particulier encore dans lequel :
une pluralité de lignes de points auxiliaires (44) s'étendent entre la couche intérieure (18) et la couche extérieure (20) ;
la pluralité de lignes de points auxiliaires (44) sont disposées dans un motif prédéterminé ; et
une des lignes de points auxiliaires (44) traverse la poche fermée (33).

8. Procédé de fabrication d'un article chaussant (10), le procédé de fabrication comprenant :
l'insertion d'une pluralité de morceaux distincts de matières particulaires de rebut (22) dans une poche fermée (33) formée entre une couche intérieure (18) d'une paroi (15) d'une tige (12) et une couche extérieure (20) de la paroi (15) de la tige (12) de l'article chaussant (10) ; dans lequel la couche extérieure (20) est formée d'un matériau au moins partiellement transparent, de sorte que les morceaux distincts de matières particulaires de rebut (22) sont au moins partiellement visibles au travers de la couche extérieure (20) ;
le couplage de la couche intérieure (18) de la paroi de la tige à la couche extérieure (20) de la paroi de la tige (12) au niveau d'une pluralité de lignes de surface collées (42), dans lequel la pluralité de lignes de surface collées (42) sont disposées selon un motif prédéterminé de sorte que la poche fermée (33) soit divisée en une pluralité de poches fermées (33a, 33b), dans lequel la poche fermée (33) est pas une poche ouverte à l'intérieur de laquelle les inserts sont librement interchangés pour modifier l'aspect extérieur de l'article chaussant (10).

9. Procédé selon la revendication 8, comprenant en outre :
la réception de matériaux de rebut ; et
la division du matériau de rebut en une pluralité de morceaux distincts de matières particulaires de rebut (22) par au moins un processus de broyage et un processus de déchiquetage, de sorte que chaque morceau distinct de matières particulaires de rebut (22) ait une forme différente.

10. Procédé selon l'une quelconque des revendications 8 à 9, comprenant en outre :
le mélange des morceaux distincts de matières particulaires de rebut (22) avec un liant de résine, de sorte que les morceaux distincts de matières particulaires de rebut (22) et le liant de résine forment collectivement un mélange ; et
le thermoformage du mélange en une couche de matières particulaires de rebut (54).

11. Procédé selon la revendication 10, dans lequel l'insertion de la pluralité de morceaux distincts de matières particulaires de rebut (22) dans la poche fermée (33) définie entre une couche intérieure (18) et une couche extérieure (20) comprend en outre :
le placement de la couche de matières particulaires de rebut (54) sur la couche extérieure (20) et en contact avec elle ; et
le positionnement de la couche intérieure (18) sur la couche de matières particulaires de rebut (54) et la couche extérieure (20), de sorte que la couche intérieure (18) et la couche extérieure (20) définissent la poche fermée (33) autour d'un périmètre de la couche de particules de rebut (54), de sorte que la couche de particules de rebut (54) est disposée à l'intérieur de la poche fermée (33).

12. Procédé selon la revendication 11, dans lequel :
les lignes de zone collées (42) entourent la poche fermée (33) et la couche de matières particulaires de rebut (54), de sorte que la poche fermée (33) est entourée par les lignes de zone collées (42) ; et
dans lequel l'accouplement de la couche intérieure (18) de la paroi (15) de la tige (12) à la couche extérieure (20) de la paroi (15) de la tige (12) est effectué par l'intermédiaire du pressage à chaud de la couche intérieure (18) à la couche extérieure (20).

13. Procédé selon la revendication 12, dans lequel :
la pluralité de morceaux distincts de matières particulaires de rebut (22) est une pluralité de morceaux distincts d'un matériau rebroyé gris ;
les morceaux distincts du matériau rebroyé gris comprennent un surplus de matériau provenant de la formation d'une tige d'un autre article chaussant ; et
les morceaux distincts du matériau rebroyé gris comprennent au moins un matériau en cuir, un matériau textile, un matériau polymère ou un matériau en mousse, ou dans lequel :
la pluralité de morceaux discrets de matières particulaires de rebut (22) est une pluralité de morceaux discrets d'un matériau rebroyé gris ;
les morceaux distincts du matériau rebroyé gris comprennent des matériaux excédentaires provenant de la formation de la structure de semelle d'un autre article chaussant ; et
les morceaux distincts du matériau rebroyé gris sont formées d'au moins un matériau thermoplastique expansé ou d'un matériau thermodurcissable.

14. Procédé selon la revendication 12, dans lequel :
la pluralité de morceaux distincts de matières particulaires de rebut (22) est une pluralité de morceaux distincts d'une matière rebroyée verte ;
les morceaux distincts du matériau rebroyé vert comprennent un matériau recyclé provenant d'une tige d'un autre article chaussant ; et
les morceaux distincts de la matière rebroyée verte comprennent des pièces distinctes d'au moins un matériau en cuir, un matériau textile, un matériau polymère ou un matériau en mousse.

15. Procédé selon la revendication 12, dans lequel :
la pluralité de morceaux distincts de matières particulaires de rebut (22) est une pluralité de morceaux distincts d'une matière rebroyée verte ;
les morceaux distincts du matériau rebroyé vert comprennent un matériau recyclé provenant d'une structure de semelle d'un autre article chaussant ; et
les morceaux distincts de la matière rebroyée verte comprennent au moins un matériau thermoplastique expansé ou un matériau thermodurcissable.
